# EUROPEAN PATENT APPLICATION

(11) **EP 1 964 793 A2**
(43) Date of publication of application: **03.09.2008**
(21) Application number: 06126655.7
(22) Date of filing: 20.12.2006
(51) Int. Cl.: B65G 15/14

(54) **Device for transporting and compacting comminuted materials**

(30) Priority: 02.01.2006 PL 37864506
(71) Applicant: International Tobacco Machinery Poland Ltd, 26 600 Radom (PL)
(72) Inventor: Chojnacki, Wojciech, 26-600, Radom (PL); Druzdzel, Arkadiusz, 26-600, Radom (PL); Polak, Jaroslaw, 26-600, Radom (PL)
(74) Representative: Misztak, Irena

(57) **Abstract**

A device for transporting and compacting comminuted materials, particularly organic plant materials, comprises belt conveyors, located convergently to each other. Transporting and compacting carriers are made from a material accepted for contact with food products, particularly with tobacco material. According to the invention, both belt conveyors, situated at an angle (α, β), respectively, relative to the horizontal direction, are equipped with uniform, continuous and endless belts (1, 2). Elements increasing the adhesion and preventing sliding between the driving rollers (3, 4) and the surface of the belt (1, 2) are located on the inner surface of the belts (1, 2) of both conveyors, i.e., on the side facing the driving rollers (3, 4), while elements increasing the adhesion, preventing sliding between the belt and the transported material, are located on the external surface of the belt (1, 2).

## Description

The invention relates to a device for transporting and compacting comminuted materials, particularly for use in the tobacco industry in tobacco material processing.

In compacting devices the compacting functionality is realized during transporting a stream of comminuted material between two convergently positioned conveyors. During the operation of conveyor assemblies, pressure forces (directed perpendicularly to the surface) and friction forces (tangent to the surface and parallel to the motion) are acting on the conveyor, as a result of squeezing the comminuted material while being transported at the same time. The friction forces, in terms of static friction, are responsible for frictionless drive transfer from driving rollers, via a carrier to the transported and compacted material. Exceeding the forces of static friction on the surface of the carrier generates forces of inertia to occur directed along its motion and also, directed reversely, causing relative sliding. Exceeding the acceptable forces causes a change of the nature of relative mechanical interactions, entering the area of sliding friction effects and, as a result, occurrence of effects adversely affecting both the transported material and the transporting carrier. Especially, the slip between the carrier and the transported material causes particularly adverse effects, including, e.g., mechanical degradation and disturbance of the uniformity and/or the continuity of the stream of the transported material, particularly tobacco material, and also adverse effects deteriorating the operation of the carrier and/or making its operation impossible at all, including thermal effects due to the sliding friction, this leading to the damage of the carrier.

A lot of devices are known in the art for transporting and compacting comminuted materials. GB 2056936 describes a structure of a pressing chain for transporting tobacco material to a cutting drum of a cutting machine for tobacco material. This chain contains a plurality of two-element plate links made from non-ferrous metals. In order to obtain a continuos, endless chain, it is necessary to connect a lot of segments in the transporting chain, between which gaps are created, through which plant juices and tiny particles of the processed material escape, contaminating the device and resulting in the necessity of regular cleaning its elements.

US 4832672 presents a structure of three-layer belt for initial compacting comminuted materials, equipped with a perforation having a predefined spacing of holes. This belt structure does not guarantee non-sliding transport of comminuted material with its simultaneous compaction.

This subject of this invention relates to a device for transporting and compacting comminuted materials, particularly organic plant materials. The device comprises belt conveyors, located convergently to each other, of which the transporting and compacting carriers of which are made from a material approved for contact with food products, particularly with tobacco material. The essence of the invention consist in both belt conveyors, situated at an appropriate angle relative to the horizontal direction, are equipped with uniform, continuous and endless belts, while elements increasing the adhesion and preventing sliding between the driving rollers and the surface of the belt are located on the inner surface of the belts of both conveyors, i.e., on the side facing the driving rollers, while elements increasing the adhesion and preventing sliding between the belt and the transported material are located on the external surface of the belt.

Preferably, the elements located on the inner surface of the belt are recesses spaced along the whole belt, across its whole width and arranged in parallel to the motion of the belt.

According to the invention, the recesses located on the inner surface of the belt are V-shaped.

The elements located on the external surface of the belt are square or rhomboidal recesses repeatably distributed on the whole surface of the belt, one of the diagonals of every recess being arranged in parallel to the motion of the belt.

Preferably, the inclination angle relative to the horizontal direction is in the range from 0° to 30°, while the ratio of the width to the total length of belt made from polyester and/or polyolefine is in the range from 1:2.5 to 1:8.5.

The device according to the invention effects non-sliding contact between the belt and a driving roller and causes that no sliding between the transported organic plant material and the belt occurs. Also, the employed belt guarantees the tightness of the transporting assembly.

So shaped inner surface of the belt, i.e., on the side facing the driving roller, increases the contact area, consequently the friction area, between the driving roller and the belt, as well as it guarantees appropriate, constant and stable in time lateral positioning of the belt. No adverse additional forces and stresses are exerted on the belt in its working portion, due to its motion dynamics, which could adversely deform the belt and/or generate adverse lateral motion of the belt.

The external surface of the belt according to the invention, i.e., its surface contacting the transported and compacted material, increases and/or maintains the coefficient of static friction between both materials, this allowing for non-sliding transport and compaction of the comminuted material stream, particularly organic plant material, particularly tobacco material, while minimizing or preventing particles of the transported and compacted organic plant material from settling in the recesses of the external surface.

The belt structure according to the invention allows for self-cleaning and/or cleaning the deposits of transported and compacted material off the belt, this significantly increasing its utility.

The present invention, particularly the external surface of the belt, along with the structure increasing the coefficient of static friction, maintains the parallelism of the axis of rotation of the driving roller to the tangent to the whole surface of the contact of the belt with the processed material, across the whole width of the contact area of the belt with the processed organic plant material, in the region of the contact of the belt with the roller.

The invention is further discussed in detail with reference to the appended drawing in which:
Fig. 1 shows a schematic side view of the conveyor assembly of the device according to the invention;
Fig. 2 shows a schematic cross-sectional view of the belt along the line I - I of Fig. 1, according to the first embodiment of the invention;
Fig. 3 shows a schematic cross-sectional view of the belt along the line I - I of Fig. 1, according to the second embodiment of the invention.

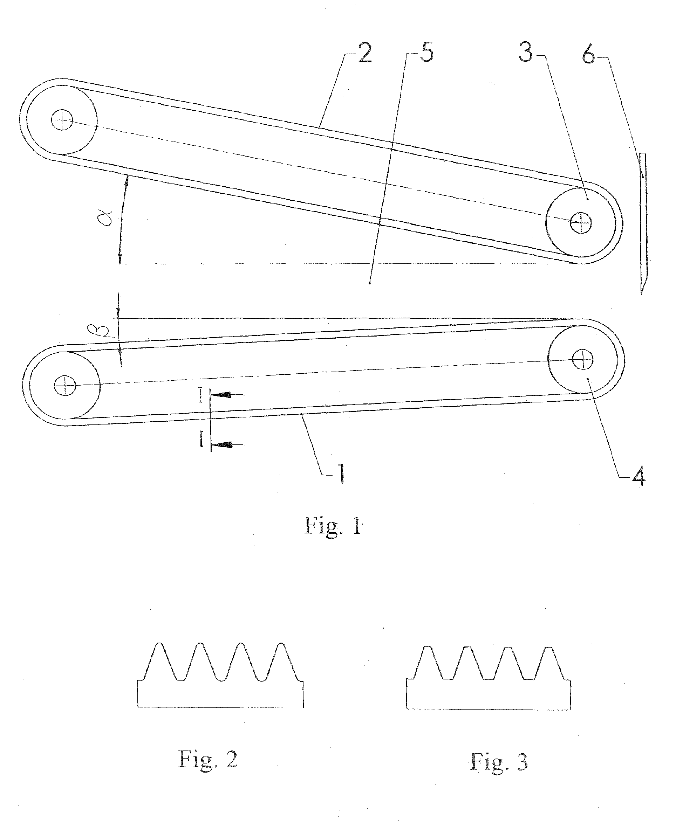

As presented in Fig. 1, a device according to the invention for transporting and compacting comminuted organic plant materials, particularly tobacco materials, comprises two belt conveyors, situated one above the other, equipped with endless belts 1, 2 and driving rollers 3, 4. The belts 1, 2 are made completely from materials, pyrolysis products of which are not toxic for humans, for example from polyesters and/or polyethylene. The conveyors are arranged convergently in the direction of transporting the material. The lower conveyor is deflected from the horizontal direction by an angle β, while the upper conveyor by an angle α. Both angles may be regulated in the range from 0° to 30°. A vertical comminuting knife 6 is located at the outlet from both conveyors.

The material, while being transported in the space 5, is squeezed due to convergent arrangement of the belt conveyors, this increasing its density.

The inner surface of the belt 1, 2 has recesses or embossments defining a closed profile, formed along the whole belt and across its whole width, parallel to each other and to the direction of the belt's motion. Exemplary shapes, known as "multi-V", are shown in Figs. 2 and 3.

Profiles on the external surface are, e.g., square or rhomboidal recesses repeatably distributed on the whole external surface of the belt, one of the diagonals of every recess being arranged in parallel to the motion of the belt, preferably the length of the recess side being in the range from 2 to 8 mm, while its depth being in the range from 0,4 to 4 mm.

According to the invention, the ratio of the width of the belt 1, 2 to its total length is in the range between 1:2.5 and 1:8.5. For example, the belt's width is in the range from 400 to 650 mm, while the total length of the belt is in the range from 2000 to 4000 mm. In particular embodiment of the invention, belts are employed having the following dimensions: width in the range 520 - 580 mm and length in the range from 2000 to 3000 mm.

## Claims

1. A device for transporting and compacting comminuted materials, particularly organic plant materials, comprising belt conveyors, located convergently to each other, the transporting and compacting carriers of which are made from a material accepted for contact with food products, particularly with tobacco material, **characterized in that** both belt conveyors, situated at an angle (α, β), respectively, relative to the horizontal direction, are equipped with uniform, continuous and endless belts (1, 2), elements increasing the adhesion and preventing sliding between the driving rollers (3, 4) and the surface of the belt (1, 2) are located on the inner surface of the belts (1, 2) of both conveyors, i.e., on the side facing the driving rollers (3, 4), while elements increasing the adhesion and preventing sliding between the belt and the transported material are located on the external surface of the belt (1, 2).

2. A device according to Claim 1, **characterized in that** elements located on the inner surface of the belt are recesses spaced along the whole belt (1, 2), across its whole width and arranged in parallel to the motion of the belt.

3. A device according to Claim 2, **characterized in that** the recesses located on the inner surface of the belt (1, 2) are V-shaped.

4. A device according to Claim 1, **characterized in that** the elements located on the external surface of the belt (1, 2) are square or rhomboidal recesses or dimples, repeatably distributed on the whole surface of the belt (1, 2), one of the diagonals of every recess/dimple being arranged in parallel to the motion of the belt.

5. A device according to Claim 1, **characterized in that** the inclination angle (α, β) relative to the horizontal direction is in the range from 0° to 30°.

6. A device according to Claim 1, **characterized in that** the ratio of the width to the total length of belt (1, 2) made from polyester and/or polyolefine is in the range from 1:2.5 to 1:8.5.
